# EUROPEAN PATENT SPECIFICATION

(11) **EP 2 244 550 B1**
(45) Date of publication and mention of the grant of the patent: **07.12.2016**
(21) Application number: 09714333.3
(22) Date of filing: 16.01.2009
(51) Int. Cl.: A01G 17/06

(54) **SPRING-TYPE SPACER MEMBER**
FEDERNDES ABSTANDSELEMENT
ÉLÉMENT D'ESPACEMENT DU TYPE À RESSORT

(30) Priority: 26.02.2008 IT PN20080014
(43) Date of publication of application: 03.11.2010
(73) Proprietor: MOLLIFICIO BORTOLUSSI S.R.L., 33080 Fiume Veneto (PN) (IT)
(72) Inventor: BORTOLUSSI, Claudio, I-33080 Fiume Veneto (IT); BORTOLUSSI, Franco, I-33080 Fiume Veneto (IT)
(74) Representative: Petruccelli, Davide
(86) International application number: PCT/EP2009/050475
(87) International publication number: WO 2009/106380

(56) References cited:
- EP-A- 0 876 756
- EP-A- 1 832 160
- FR-A- 2 903 570

## Description

The present invention refers to a spring-type spacer member, in particular of the kind used in connection with wires of framework structures intended to support vine-shoots or branches of plants in general.

In agricultural applications in general, and in the vineyard sector, i.e. viniculture in particular, it is a generally known practice to provide and set up proper support structures for the plants, said structures being in general comprised of rows of poles stuck into the ground so as to form corresponding rows of vines or fruit plants in general. The poles themselves are spaced from each other and are interconnected at the portions thereof protruding from the ground by means of a plurality of horizontal wires, generally termed tie-wires or scaffold wires in the art, which act as a support for the vine-shoots or the branches of the plants, depending on the actual kind of plantation. In this way, the foliar surface of the plants can advantageously be organized so as to favour the ripening process of the fruits and facilitate the delivery of the products that are generally needed to treat the vegetation, i.e. the plants themselves.

Usually, the above-mentioned scaffold wires, or tie-wires, are organized in pairs of wires provided at the same height relative to the ground and extending so as to face each other on both sides of each pole. Such wires are arranged so as to extend in the same direction of each row of poles. For each row of poles, there can of course be provided several pairs of scaffold wires distributed at different heights from the ground.

Such scaffold wires, or tie-wires, are supported along the row of poles by means of spring-type spacer members, which are generally made in the form of a single-piece unitary construction and comprise a pair of arms branching off a common base portion shared by both of them, wherein each such arm has an extremity provided with an eyelet adapted to receive and accommodate a tie-wire. A first example of spacer members of this kind is disclosed in EP 0 876 756.

The way in which spacer members of the above-described type are fixed depends on the type of poles used to form the row. Anyway, this is generally done by affixing a staple or a nail, which is driven into the pole to thereby have the base portion of the spacer member, from which the support arms for the tie-wires are branching off, firmly fastened to the pole. In the case that the pole is made of metal, concrete or any other kind of material that proves scarcely pierceable by a nail or a staple, the spacer member is attached to the pole by winding the base portion of the spacer member round the pole and then tightening and clamping a lower portion of the arms together with a hook-like clamp.

Spacer members of the kind disclosed in EP 0 876 756 have a major drawback in that, under the weight of the plants and due to the action of weather agents, such as blowing wind, the spacer members themselves can deflect and bend about their base portion attached to the pole, thereby bringing the scaffold wires out of alignment and ruffling the overall arrangement of the row of plants, wherein the previous work done to orderly organize the plants in this way thwarted with a resulting disadvantage introduced in the production of fruits and the convenience in carrying out the periodical treatments which the plants themselves have to undergo.

A solution to this yielding, i.e. bending problem is set forth in the European Patent application EP 1 832 160, in which there is disclosed a spring-type spacer member for rows of vines, which is provided with a stem that extends between the two support arms for the scaffold wires and is in turn provided with two hook-like clamps, each one of which is arranged to extend towards one of the arms to the purpose of enabling the latter to be clamped on to the stem. The whole spacer member described above is capable of being fastened onto a pole by affixing nails or staples into both the base portion of the arms, in the same way as described afore with reference to the spacer member disclosed in EP 0 876 756, and the stem therebetween, thereby firmly fastening the spacer member on to the pole and doing away with any possibility for the same spacer member to be caused to bend and move away from the pole.

A drawback of spacer members of the kind shown in EP 1 832 160 lies in the impossibility for them to be attached to poles made of metal or concrete, i.e. poles that are not fit for being pierced by the tip of a nail or a staple, so that such spacer members are not practically applicable to poles of all kinds.

A further drawback encountered with spacer members intended for attachment to poles of a row of plants by means of nails or staples lies in the fact that the movements of scaffold wires, and the resulting displacement thereof into an out-of-alignment arrangement between contiguous poles, which are brought about by the normal growth of the plants supported by them, as well as the afore-mentioned action of weather agents, cannot simply be opposed and corrected by rapidly relocating the spacer members in more appropriate positions to cope with the new configuration of the plants in the row and, hence, the related scaffold wires running between the poles to support such plants. When the scaffold wires are in this way thrown out of alignment, the spacer members of the above-described kind disadvantageously require the related attachment nails or staples to be first of all completely removed from the poles and, ultimately, the spacer members themselves to be first completely taken off the related poles and then attached again in the new selected position. This of course results in a considerable increase in the maintenance work required to keep the rows of plants in good order, under a progressive deterioration of the surfaces of the poles due to repeated extraction and sticking of attachment nails from and into the poles themselves.

Another example of spring-type spacer member is also described in FR 2 903 570.

It therefore is the object of the present invention to provide a spring-type spacer member, in particular of the kind used in connection with wires of framework structures intended to support vine-shoots or branches of plants in general, which is effective in doing away with the drawbacks and disadvantages of prior-art spacer members of the related kind.

Within this object, it is a purpose of the present invention to provide a spring-type spacer member that is capable of being attached to any kind of poles, regardless of the material which such poles are made of.

It is a further purpose of the present invention to provide a spring-type spacer member that is adapted to be removed from and re-attached to the related pole through simple operations to be performed manually without any use of tools, wherein relocating said spacer member can be carried out a relatively high number of times without impairing not only the working effectiveness of the spacer member, but also the integrity of the pole which the same spacer member is attached to.

Another purpose of the present invention is to provide a spring-type spacer member that is self-sustaining on a pole, i.e. is capable of being attached on to a pole without any aid of nails, staples or other similar fastening means.

Yet another purpose of the present invention is to provide a spring-type spacer member that is effective in ensuring a firm, stable and reliable support to the scaffold wires of a row of plants, wherein the spacer member shall in particular be capable of withstanding both the weight of the growing plants and the action of weather agents in general, without deflecting under such weight and action and, therefore, without causing the orderly arrangement of the scaffold wires to be upset.

Still a further purpose of the present invention is to provide a spring-type spacer member that enables the scaffold wires, or tie-wires, to be handled and positioned independently of each other, so as to make it possible for activities to be performed for selectively arranging or setting up the individual scaffold wires by even working from a single side of the row of plants.

An equally important purpose of the present invention is to provide a spring-type spacer member that is capable of being easily and conveniently attached to poles being differently sized and shaped in their cross-sections.

According to the present invention, these aims as set forth above are reached in a spring-type spacer member that incorporates the features and characteristics as recited in the appended claim 1. Features and advantages of the present invention will anyway be more readily understood from the description that is given below by way of non-limiting example with reference to the accompanying drawings, in which:
- Figure 1 is a perspective view of a spring-type spacer member according to the present invention, as viewed in the state in which it is applied on to a pole;
- Figure 2 is a perspective view of a first body of the spacer member shown in Figure 1, as viewed in the state in which it is applied on to a pole;
- Figure 3 is a view of a second body of the spacer member shown in Figure 1;
- Figure 4 is a view of a modified embodiment of the second body;
- Figure 5 is a view of a modified embodiment of a spring-type spacer member according to the present invention, in which the arms are disengaged from the second body;
- Figure 6 is a view of the spacer member shown in Figure 5, in which the arms are associated to the second body.

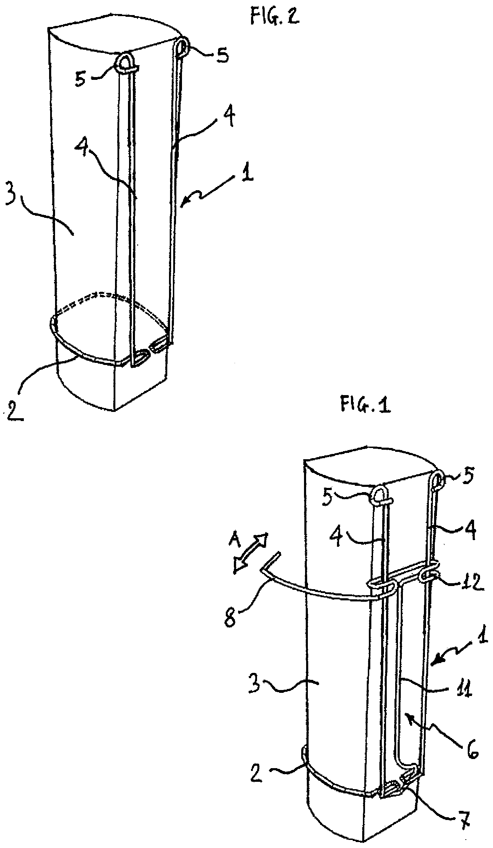

With reference to Figures 1, 2 and 3, a spring-type spacer member according to the present invention comprises a first body 1, which is provided with a portion 2 that is so conformed as to be able to be wound round a pole 3 of a row of poles. From such portion 2 there extend a pair of arms 4 that develop along a plane lying substantially perpendicular to the plane on which there extends the portion 2. Each such arm 4 is movable about the portion 2 and is provided with support means 5, which preferably comprise an eyelet, designed to support the scaffold wires extending between the poles of a same row of plants to sustain the vegetation of such plants.

Although a first body 1 of the spacer member illustrated in the Figures accompanying this specification is provided with two arms 4, it can be readily appreciated that, based on the teachings of this description, anyone skilled in the art is fully able to devise a spacer member of the same kind, which however comprises a first body 1 that is provided with just a single arm 4. Therefore, even such single-arm configuration of the spacer member has to be considered as falling within the scope of the present invention.

The spacer member itself is provided with a second body 6, which is provided separately from the above-mentioned first body 1 and is designed to both attach the latter on to the pole 3 and prevent the arms 4 from deflecting due to the action of the weight of the plants resting on the scaffold wires, or tie-wires, supported by the support means 5.

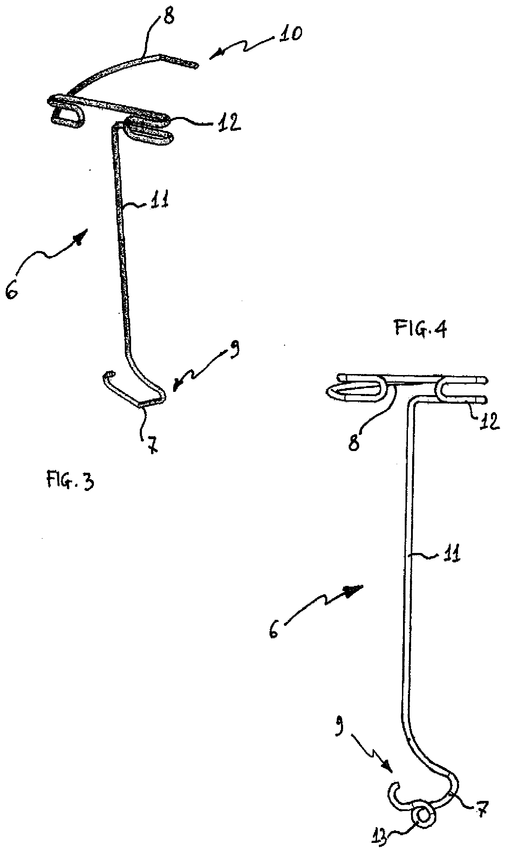

Such second body 6 comprises first linking or hook-up means 7 adapted to tighten and clamp the portion 2 of the first body round the pole 3, so as to fix and set the position of the first body 1 relative to said pole 3. Tightening and clamping the portion 2 round the pole are allowed for the elasticity of the material, which the entire spacer member is made of. The first hook-up means 7, in fact, exert such a force on two opposite side borders of the portion 2 as to cause such side borders to be pulled close to each other, thereby tightening said portion 2 round the pole 3. For the second body 2 to be fixed to the pole 3, such second body 6 is provided of second hook-up means 8, which are advantageously conformed so as to at least partially wrap round the pole 3. Preferably, the first hook-up means 7 are provided at a first end portion 9 of the second body 6, whereas the second hook-up means 8 are provided at a second end portion 10 of said second body 6 (see Figure 3). The same second body 6 comprises a stem 11 that extends between said first and second hook-up means 7, 8 on a plane that turns out as being substantially orthogonal to the plane containing the second hook-up means 8. According to the present invention, the planes containing the stem 11 and each arm 4, respectively, are substantially parallel.

Indicated by the arrow A in Figure 1 are the directions in which the second hook-up means 8 move so as to enable the second body 6 to be fixed to and removed from the pole 3, wherein such movements are made possible and allowed for by the elasticity of the material, which the second body 6 is made of.

In fact, both the first and the second body 2, 6 are preferably comprised each of a single section of suitably shaped metal wire.

For each arm 4 and the second body 6 to be able to be associated in a removable manner, the spacer member is provided with third hook-up means 12, which - as this shall be illustrated in greater detail further on - may indifferently be provided either on each arm 4 or the second body 6, or even on both the arms and the second body. Shown in Figures 1 to 3 is a spacer member, in which the third hook-up means 12 are provided on the second body 6 and extend towards each arm 4.

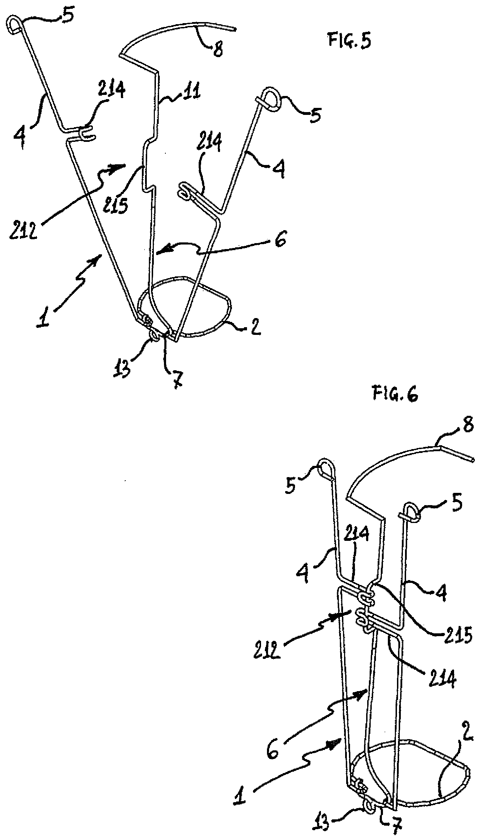

Shown in Figures 5 and 6 is a modified embodiment of the spacer member according to the present invention. For greater representative convenience, the pole onto which the spacer member is due to be attached is not shown. This modified embodiment of the inventive spacer member substantially differs from the one illustrated in Figures 1 to 4 in the shape of the third hook-up means 212. The details that are common to both the earlier described embodiment and this modified embodiment are indicated using the same reference numerals, owing to them being substantially identical in both their working mode and their construction. Therefore, as far as these common details and parts are concerned, reference can be conveniently made to what has been already described in connection with the embodiment illustrated in Figures 1 to 4. Moreover, even this second embodiment of the inventive spacer member may comprise just a single arm 4.

The third hook-up means 212 comprise a pair of branches 214 that extend towards each other, wherein each such branch is provided on one of the arms 4 of the first body 1. According to a preferred embodiment, in view of enabling each arm 4 and the second body 6 to be quickly fastened to each other, the third hook-up means 212 may comprise a loop 215 formed on the first body 1. This loop 215 enables the branches 214 to cling to the second body 6, while preventing the same branches 214 from interfering with the surface of the pole to which the spacer member is being attached. Figure 6 illustrates the spacer member of Figure 5 as represented with the arms 4 associated to the second body 6. Quite apparent from the illustration in Figure 6 is the fact that the two branches 214 are provided on the respective arms 4 in a staggered arrangement relative to each other, so as to prevent them from interfering with each other when engaging the second body 6. Apparent from the illustration in Figure 6 is also the fact that the arms 4 may be associated to the second body 6 independently of each other, thereby allowing just a single scaffold wire sustained by the support means 5 to be handled each time.

In a modified embodiment of the second body 6 as represented in Figure 4, the first hook-up means 7, which are preferably formed in a first end portion 9, are provided with one or several coils 13 intended to allow such means 7 to move elastically and clamp the side borders of the portion 2 of the first body 1 tightly together. This is effective in allowing the second body 6 to be adapted to the clamping of a portion 2 of a first body 1 in such situations in which the spacer member and the pole 3 do not coincide, i.e. do not fit perfectly together due to possible tolerances in the size or shape of the poles 3 and the different cross-sections that said poles may feature. In this way, the same spacer member may be attached on any kind of pole whatsoever in an invariably optimum manner.

One or several coils 13 may be provided on the second body 6 of the second modified embodiment illustrated in Figures 5 and 6.

A spacer member according to the present invention, and in particular a spacer member comprising a pair of arms 4, is attached to a pole 3 following the procedure that is described below with particular reference to Figures 1 and 2. This procedure can be performed manually without any use of tools whatsoever. The portion 2 of the first body 1 of the spacer member is wound round the pole by having the arms 4 opened wide apart (Figure 2). Then, the first hook-up means 7 of a second body 6 are linked to two side borders of the portion 2, thereby drawing them against each other and generating a force that is effective in tightening and clamping the portion 2 round the pole 3. The second hook-up means 8 of the second body 6 are located at least partially round the pole 3 through an elastic deformation of the material, which the second body 6 is made of, in the directions indicated by the arrows A in Figure 1. The two arms 4, which come to lie on mutually opposite sides relative to the second body 6 once the two bodies 2, 6 of the spacer member are associated to each other, turn as this point out as being movable between a first position, in which each arm 4 is associated to the second body 6 owing to the third hook-up means 12, and a second position, in which each arm 4 is on the contrary released from the second body 6. Shown in Figure 1 is a spacer member in which each arm 4 is engaging the second body 6 by means of the third hook-up means 12.

Fully apparent from the above description is therefore the ability of the present invention to effectively reach the aims and advantages cited afore, by providing a spring-type spacer member capable of being manually attached to the support poles of rows of plants, regardless not only of the material which such poles are made of, actually, but also of the cross-sectional shape and size thereof, wherein no use of tools of any kind is required to perform the related attachment procedure. The spacer member according to the present invention has the distinctive advantage of being easily removable from and re-positionable on the related pole in any desired different position, without this involving any damage or alteration suffered by the surface of the same pole. Furthermore, the spacer member according to the present invention enables undesired deflections of the spacer member to be prevented, as these may be induced by the weight of the growing vegetation of the plants and the action of weather agents, thereby contributing to an appreciable reduction in the periodical maintenance requirements of the scaffold wires sustaining the plants in the rows, as well as to the achievement of an optimum yield in the production of the plants themselves. Moreover, a spacer member according to the present invention allows the scaffold wires used in the rows of plants to be acted upon, i.e. handled individually by simply acting on the arm of the spacer member which sustains the related wire. In this way, a single operator will be fully capable of easily and conveniently rearrange the position of the individual scaffold wires without any need arising for him/her to insert his/her own arm in the vegetation at the risk of suffering some injury or damaging the plants. The arms of the spacer member can be associated to the first body thereof independently of each other, thereby allowing the operator to lay out the scaffold wires by first working on a side of the row and then on the other side.

It should be noticed that the materials used, as well as the shapes and the sizing of the individual items of the spring-type spacer member may each time be selected so as to more appropriately meet the particular requirements or suit the particular application.

## Claims

1. Spring-type spacer member comprising:
- a first body (1) provided with a portion (2) adapted to be wound round a pole, and further provided with at least one arm (4) provided with support means (5);
- a second body (6) comprising first hook-up means (7) adapted to tighten said portion (2) around said pole, and second hook-up means (8) adapted to clamp said second body (6) on to said pole,
**characterised in that**:
- third hook-up means (12, 212) adapted to associate said at least one arm (4) with said second body (6), said second body (6) comprises a stem (11) that extends between said first and said second hook-up means (7, 8).

2. Spring-type spacer member according to claim 1, wherein said first hook-up means (7) are provided in a first end portion (9) of the second body (6) and said second hook-up means (8) are provided in a second end portion (10) of said second body (6), and are conformed so as to wind at least partially round said pole.

3. Spring-type spacer member according to claims 2, wherein said stem (11) and said second hook-up means (8) extend on substantially orthogonal planes.

4. Spring-type spacer member according to any of the preceding claims, wherein said portion (2) and said at least one arm (4) extend on substantially orthogonal planes.

5. Spring-type spacer member according to claims 3 and 4, wherein said stem (11) and said at least one arm (4) extend on substantially parallel planes.

6. Spring-type spacer member according to any of the preceding claims, wherein said third hook-up means (212) comprise a branch (214) provided on said at least one arm (4),

7. Spring-type spacer member according to claim 6, wherein said first body (1) comprises a pair of arms (4) arranged on mutually opposite sides relative to the second body (6), and a pair of branches (214) that extend towards each other.

8. Spring-type spacer member according to claim 6 or 7, wherein said third hook-up means (212) further comprise a loop (215) formed on said second body (6).

9. Spring-type spacer member according to any of the claims 1 to 5, wherein said third hook-up means (12) are formed on said second body (6) and extend towards said at least one arm (4).

10. Spring-type spacer member according to any of the preceding claims, wherein said at least one arm (4) is movable between a first position, in which said at least one arm (4) and said second body (6) are associated to each other, and a second position, in which said at least one arm (4) is released from the second body (6).

11. Spring-type spacer member according to any of the preceding claims, wherein said first body (1) comprises a pair of arms (4) arranged on opposite sides relative to the second body (6).

12. Spring-type spacer member according to any of the preceding claims, wherein said support means (5) comprise at least one eyelet.

13. Spring-type spacer member according to any of the preceding claims, wherein said first hook-up means (7) are provided with one or several coils (13) allowing said first hook-up means (7) to move elastically.

14. Spring-type spacer member according to any of the preceding claims, wherein each one of said first and said second body (1, 6) is made of a single section of suitably shaped metal wire.

## Patentansprüche

1. Feder-Abstandshalteelement, das umfasst:
einen ersten Körper (1), der mit einem Abschnitt (2) versehen ist, der zum Wickeln um eine Stange herum eingerichtet ist, und der des Weiteren mit wenigstens einem Arm (4) versehen ist, der mit einer Trageeinrichtung (5) versehen ist;
einen zweiten Körper (6), der eine erste Einhakeinrichtung (7), die zum Festziehen des Abschnitts (2) um die Stange herum eingerichtet ist, sowie eine zweite Einhakeinrichtung (8) umfasst, die zum Festklemmen des zweiten Körpers (6) an der Stange eingerichtet ist,
**dadurch gekennzeichnet, dass:**
eine dritte Einhakeinrichtung (12, 212) zum Verbinden des wenigstens einen Arms (4) mit dem zweiten Körper (6) eingerichtet ist,
der zweite Körper (6) einen Schaft (11) umfasst, der sich zwischen der ersten und der zweiten Einhakeinrichtung (7, 8) erstreckt.

2. Feder-Abstandshalteelement nach Anspruch 1, wobei sich die erste Einhakeinrichtung (7) an einem ersten Endabschnitt (9) des zweiten Körpers (6) befindet und sich die zweite Einhakeinrichtung (8) an einem zweiten Endabschnitt (10) des zweiten Körpers (6) befindet und sie so eingerichtet sind, dass sie wenigstens teilweise um die Stange herum gewunden sind.

3. Feder-Abstandshalteelement nach Anspruch 2, wobei sich der Schaft (11) und die zweite Einhakeinrichtung (8) in im Wesentlichen rechtwinkligen Ebenen erstrecken.

4. Feder-Abstandshalteelement nach einem der vorangehenden Ansprüche, wobei sich der Abschnitt (2) und der wenigstens eine Arm (4) in im Wesentlichen rechtwinkligen Ebenen erstrecken.

5. Feder-Abstandshalteelement nach den Ansprüchen 3 und 4, wobei sich der Schaft (11) und der wenigstens eine Arm (4) in im Wesentlichen parallelen Ebenen erstrecken.

6. Feder-Abstandshalteelement nach einem der vorangehenden Ansprüche, wobei die dritte Einhakeinrichtung (212) eine Abzweigung (214) umfasst, die sich an dem wenigstens einen Arm (4) befindet.

7. Feder-Abstandshalteelement nach Anspruch 6, wobei der erste Körper (1) ein Paar Arme (4), die an dem zweiten Körper (6) gegenüberliegenden Seiten angeordnet sind, sowie ein Paar Abzweigungen (214) umfasst, die sich auf einander zu erstrecken.

8. Feder-Abstandshalteelement nach Anspruch 6 oder 7, wobei die dritte Einhakeinrichtung (212) des Weiteren eine Schleife (215) umfasst, die an dem zweiten Körper (6) ausgebildet ist.

9. Feder-Abstandshalteelement nach einem der Ansprüche 1 bis 5, wobei die dritte Einhakeinrichtung (12) an dem zweiten Körper (6) ausgebildet ist und sich auf den wenigstens einen Arm (4) zu erstreckt.

10. Feder-Abstandshalteelement nach einem der vorangehenden Ansprüche, wobei der wenigstens eine Arm (4) zwischen einer ersten Position, in der der wenigstens eine Arm (4) und der zweite Körper (6) miteinander verbunden sind, und einer zweiten Position bewegt werden kann, in der der wenigstens eine Arm (4) von dem zweiten Körper (6) gelöst ist.

11. Feder-Abstandshalteelement nach einem der vorangehenden Ansprüche, wobei der erste Körper (1) ein Paar Arme (4) umfasst, die an dem zweiten Körper (6) gegenüberliegenden Seiten angeordnet sind.

12. Feder-Abstandshalteelement nach einem der vorangehenden Ansprüche, wobei die Trageeinrichtung (5) wenigstens eine Öse umfasst.

13. Feder-Abstandshalteelement nach einem der vorangehenden Ansprüche, wobei die erste Einhakeinrichtung (7) mit einer oder mehreren Windung/en (13) versehen ist, die zulässt/zulassen, dass sich die erste Einhakeinrichtung (7) elastisch bewegt.

14. Feder-Abstandshalteelement nach einem der vorangehenden Ansprüche, wobei der erste und der zweite Körper (1, 6) jeweils aus einem einzelnen Teilabschnitt eines geeignet geformten Metalldrahtes bestehen.

## Revendications

1. Elément d'espacement du type à ressort comprenant :
- un premier corps (1) pourvu d'une partie (2) apte à être enroulée autour d'un poteau, et en outre pourvu d'au moins un bras (4) muni de moyens de support (5),
- un second corps (6) comprenant des premiers moyens d'accrochage (7) destinés à serrer ladite partie (2) autour dudit poteau, et des seconds moyens d'accrochage (8) adaptés pour serrer ledit second corps (6) sur ledit poteau,
**caractérisé en ce que**
- des troisièmes moyens d'accrochage (12, 212) adaptés pour associer ledit au moins un bras (4) avec ledit second corps (6), ledit second corps (6) comprend une tige (11) qui s'étend entre lesdits premiers et seconds moyens d'accrochage (7, 8).

2. Elément d'espacement de type ressort selon la revendication 1, dans lequel lesdits premiers moyens d'accrochage (7) sont prévus dans une première partie d'extrémité (9) du second corps (6) et lesdits seconds moyens d'accrochage (8) sont prévus dans une seconde partie d'extrémité (10) dudit second corps (6) et sont conformés de manière à s'enrouler au moins partiellement autour dudit poteau.

3. Elément d'espacement de type ressort selon la revendication 2, dans lequel ladite tige (11) et lesdits seconds moyens d'accrochage (8) s'étendent sur des plans sensiblement orthogonaux.

4. Elément d'espacement de type ressort selon l'une quelconque des revendications précédentes, dans lequel ladite partie (2) et ledit au moins un bras (4) s'étendent sur des plans sensiblement orthogonaux.

5. Elément d'espacement de type ressort selon l'une des revendications 3 et 4, dans lequel ladite tige (11) et ledit au moins un bras (4) s'étendent sur des plans sensiblement parallèles.

6. Elément d'espacement de type ressort selon l'une quelconque des revendications précédentes, dans lequel lesdits troisièmes moyens d'accrochage (212) comprennent une branche (214) disposée sur ledit au moins un bras (4).

7. Elément d'espacement de type ressort selon la revendication 6, dans lequel ledit premier corps (1) comprend une paire de bras (4) disposés sur des côtés mutuellement opposés par rapport au second corps (6), et une paire de branches (214) qui s'étendent l'une vers l'autre.

8. Elément d'espacement de type ressort selon la revendication 6 ou 7, dans lequel lesdits troisièmes moyens d'accrochage (212) comprennent en outre une boucle (215) formée sur ledit second corps (6).

9. Elément d'espacement de type ressort selon l'une quelconque des revendications 1 à 5, dans lequel lesdits troisième moyens d'accrochage (12) sont formées sur ledit second corps (6) et s'étendent vers ledit au moins un bras (4).

10. Elément d'espacement de type ressort selon l'une quelconque des revendications précédentes, dans lequel ledit au moins un bras (4) est mobile entre une première position, dans laquelle ledit au moins un bras (4) et ledit second corps (6) sont associés l'un à l'autre, et une seconde position, dans laquelle ledit au moins un bras (4) est libéré du second corps (6).

11. Elément d'espacement de type ressort selon l'une quelconque des revendications précédentes, dans lequel ledit premier corps (1) comprend une paire de bras (4) disposés sur des côtés opposés par rapport au second corps (6).

12. Elément d'espacement de type ressort selon l'une quelconque des revendications précédentes, dans lequel lesdits moyens de support (5) comprennent au moins un oeillet.

13. Elément d'espacement de type ressort selon l'une quelconque des revendications précédentes, dans lequel lesdits premiers moyens d'accrochage (7) sont pourvus d'une ou de plusieurs bobines (13) permettant auxdits premiers moyens d'accrochage (7) de se déplacer de manière élastique.

14. Elément d'espacement de type ressort selon l'une quelconque des revendications précédentes, dans lequel chacun desdits premier et second corps (1, 6) est constitué d'un seul tronçon de fil métallique de forme appropriée.
